# EUROPÄISCHE PATENTSCHRIFT

(11) **EP 0 864 951 B1**
(45) Veröffentlichungstag und Bekanntmachung des Hinweises auf die Patenterteilung: **13.06.2001**
(21) Anmeldenummer: 98200489.7
(22) Anmeldetag: 13.02.1998
(51) Int. Cl.: G05B 19/042

(54) **Schaltschrank mit einer zentralen Steuerungseinrichtung zum Überwachen und Steuern von Einbau- und/oder Anbaueinheiten**
Switchgear cabinet with a central control system for monitoring and control of integrated and/or separate units
Armoire électrique avec dispositif de commande centrale pour la surveillance et la commande d'unités integrées et/ou séparées

(30) Priorität: 12.03.1997 DE 19710019
(43) Veröffentlichungstag der Anmeldung: 16.09.1998
(73) Patentinhaber: Rittal-Werk Rudolf Loh GmbH & Co. KG, 35745 Herborn (DE)
(72) Erfinder: Beck, Wilfried, 35578 Wetzlar (DE); Hain Markus, 35684 Dillenburg (DE); Kreiling, Jörg, 35444 Biebertal (DE)
(74) Vertreter: Fleck, Hermann-Josef, Dr.-Ing.

(56) Entgegenhaltungen:
- EP-A- 0 192 108
- DE-A- 3 326 977
- US-A- 4 567 557
- US-A- 5 317 501
- "PCS AND SMART I/O INVADE PLC TERRITORY" I & CS - INDUSTRIAL AND PROCESS CONTROL MAGAZINE, Bd. 68, Nr. 5, 1.Mai 1995, Seiten 53-56, XP000508356

## Beschreibung

Die Erfindung bezieht sich auf einen Schaltschrank mit einer zentralen Steuerungseinrichtung zum Überwachen und Steuern von Einbaueinheiten und/oder Anbaueinheiten des Schaltschranks in vorgebbarer Weise.

Bei einem bekannten Schaltschrank, wie er in der DE 33 26 977 C2 angegeben ist, wird z.B. eine Einbau- oder Anbaueinheit in Form einer Klimatisierungsbaugruppe überwacht und gesteuert, insbesondere geregelt. Bei einem derartigen Schaltschrank kann die Klimatisierung nur global für das gesamte Schrankvolumen geregelt werden, und die Abstimmung auf besondere Anforderungen nicht nur hinsichtlich der Klimatisierung, sondern auch hinsichtlich anderer Funktionen des Schaltschranks ist nicht möglich.

Weiter ist aus dem Dokument US 5 317 501 eine Steuereinrichtung bekannt, die in einem Fehäuse untergebracht wird.

Der Erfindung liegt die Aufgabe zugrunde, einen Schaltschrank bereitzustellen, der bei einfacher Programmierbarkeit hinsichtlich Überwachung und Steuerung vielfältige Anpassungsmöglichkeiten an unterschiedliche Einsatzbedingungen bietet, wobei der Aufbau einfach und übersichtlich ist.

Diese Aufgabe wird mit den Merkmalen des Anspruchs 1 gelöst. Hiernach ist also vorgesehen, daß die zentrale Steuerungseinrichtung Komponenten eines Personalcomputers aufweist, über die sie programmierbar ist und mit denen die Überwachung, Steuerung und/oder Regelung nach vorgebbaren Programmen erfolgt.

Die Informationen von und zu unterschiedlichen Überwachungs- und Steuerungsbaugruppen sind also in einer zentralen Steuerungseinrichtung zusammengeführt, die Komponenten eines Personalcomputers aufweist. Die Zustände der verschiedenen Einbaueinheiten bzw. Anbaueinheiten des Schaltschrankes können individuell, auch in Abhängigkeit voneinander, auf jeweils gegebene Einsatzbedingungen des Schaltschranks abgestimmt werden. Auf diese Weise läßt sich der Schaltschrank sowohl im Innen- als auch im Außenbereich an ganz unterschiedliche Anforderungen auf einfache Weise anpassen, wobei die geforderten Zustände zuverlässig überwacht und eingehalten werden. Mit den Komponenten des Personalcomputers kann Standardsoftware eingesetzt, und standardisierte Schnittstellen können verwendet werden. Die Programmierung muß nicht auf Assemblerebene, sondern kann mit höheren Programmiersprachen erfolgen, so daß sich der Benutzer nicht in eine spezielle Programmiersprache einarbeiten muß. Die Anwenderprogramme können vom Personalcomputer übernommen oder auf diesem entwickelt werden. Für die Ein-/Ausgabe können Bibliothekselemente verwendet werden, die ein einfaches Programmieren ermöglichen. Die Hardware zum Anschluß eines Busses, insbesondere eines I² C-Busses, kann ebenfalls vom Personalcomputer übernommen werden.

Ein vorteilhafter Aufbau der zentralen Steuerungseinrichtung besteht darin, daß die Komponenten einen personalcomputer-typischen Mikroprozessor, ein Personalcomputer-Standardbetriebssystem und einen mit diesem kompatiblen Kommandoprozessor sowie Treibereinheiten umfassen. Diese Komponenten können auf einer Hauptplatine angeordnet sein und beanspruchen wenig Platz. Da die Steuerungsfunktionen automatisch ablaufen, wenn sie einmal programmiert sind, erübrigt sich.die Installation einer Bildschirmanzeige und. Tastatur. Ist eine weitere Programmierung erforderlich, so kann dies einfach dadurch geschehen, daß über eine Treibereinheit und eine entsprechende Schnittstelle vorübergehend ein selbständiger Personalcomputer oder dgl. angeschlossen wird.

Zur Erleichterung der Programmierung ist weiterhin vorgesehen, daß die Steuerungseinrichtung einen Anwendungsprogrammteil aufweist, mit dem die Überwachungs-, Steuerungs- und/oder Regelungsdaten bestimmbar, d.h. vorgebbar und/oder berechenbar, sind.

Für eine vielseitige, standardisierte Verbindung mit den Überwachungs- und/oder Steuerungsbaugruppen sind die Maßnahmen vorteilhaft, daß die Treibereinheiten einen Ein-/Ausgabe-Treiber, über den Sensoren abfragbar sind, einen Treiber für eine serielle Schnittstelle, über den Peripheriegeräte einschließlich eines selbständigen Personalcomputers ankoppelbar sind, und einen Netzwerk-Treiber aufweisen, über den die Steuereinrichtung an einen Daten-BUS anschließbar ist.

Weiterhin kann vorgesehen sein, daß die Überwachungsbaugruppen eine Sensoreinrichtung mit wahlweise mindestens einem Feuchtesensor, einem Türendschalter, einem Temperaturfühler, einem Vibrationssensor, einem Rauchsensor, einem Strom-Meßwandler, einem Spannungs-Meßwandler, einem Kunden-Temperaturfühler, einem Code-Schloß und/oder einem Kartenleser aufweisen. Damit können verschiedenartige Informationen bezüglich unterschiedlicher Betriebszustände und Sicherheitsmaßnahmen gewonnen'und ausgewertet werden. Dabei ist die Signalweitergabe und Verarbeitung einfach ausgeführt, wenn vorgesehen ist, daß die Sensoreinrichtung über eine Eingangsschnittstelle mit der zentralen Steuerungseinrichtung in bidirektionaler Verbindung steht.

Die Funktionssicherheit des gesamten Überwachungssystems wird dabei durch die Maßnahmen verbessert, daß die Überwachungsbaugruppen eine Funktiönsüberwachung mit einer Spannungsversorgungseinrichtung und einer Betriebswertüberwachung aufweisen, daß bei Ausfall einer Normalversorgung auf eine Notversorgung umgeschaltet wird, um programmierte Notfunktionen aufrecht zu erhalten, und daß die zentrale Steuerungseinrichtung separat gepuffert ist.

Das Klimatisierungssystem ist einfach und hinsichtlich der Steuerung und Regelung übersichtlich organisiert durch die Maßnahmen, daß die Steuerungsbaugruppen eine Regelungs- und Steuerungsschnittstelle aufweisen, die einerseits mit der zentralen Steuerungseinrichtung und andererseits mit einer Klimatisierungseinrichtung wahlweise mindestens einen Wärmetauscher, einen Ventilator, ein Kühlgerät, eine Heizung, einen Türmagnet und/oder einen Kunden-Lüfter umfaßt, daß die für die Regelung und Steuerung benötigten Signale in der Regelungs- und Steuerungsschnittstelle generierbar sind und daß die Klimatisierungseinrichtung entsprechend Signalen der zentralen Steuerungseinrichtung ansteuerbar ist.

Ein Einblick in die Betriebszustände und die Möglichkeit einer diesbezüglichen Ansteuerung entsprechender Ausgabeeinheiten werden dadurch erzielt, daß die Steuerungsbaugruppen eine Ausgabeschnittstelle aufweisen, die einerseits mit der zentralen Steuerungseinrichtung in bidirektionaler Verbindung steht und andererseits mit einer Ausgabeeinrichtung verbunden ist, daß die Ausgabeeinrichtung wahlweise mindestens einen parallelen Ausgang, ein Relais, einen Optokoppler, einen Bussystemausgang, einen Telemetrieausgang, einen Netzwerk-Ausgang, einen PC-Schnittstellenausgang, einen Analogsignalausgang, eine Anzeigeneinrichtung, eine Leuchtdiodenanzeige und/oder eine Symbolanzeigeeinheit mit Symbolanzeigeelementen aufweist und daß in der Ausgabeschnittstele Signale der zentralen Steuerungseinrichtung zum Ansprechen der Ausgabeeinrichtung umformbar sind.

Ist vorgesehen, daß mit der zentralen Steuerungseinrichtung, Bedientasten, eine Programmier-, Einstell- und Testeinrichtung und/oder eine Leitstelle bidirektional verbunden sind und daß mit der Programmier-, Einstell- und Testeinrichtung fest eingespeicherte Testprozeduren aufrufbar, bestimmte Programmteile änderbar und/oder kundenspezifische Referenzwerte eingebbar sind, so kann jederzeit auf einfache Weise eine Funktionsprüfung und Änderung von eingestellten Parametern, wie z.B. Temperatureinstellwerten, vorgenommen werden. Auf diese Weise ist auch eine Einstellung auf geänderte Bedingungen leicht möglich.

Ein übersichtlicher Aufbau wird weiterhiri dadurch begünstigt, daß die zentrale Steuerungseinrichtung auf einer Hauptplatine aufgebaut ist und daß alle Einund Ausgänge miteinander verknüpfbar sind.

Die Erfindung wird nachfolgend anhand eines Ausführungsbeispiels unter Bezugnahme auf die Zeichnungen näher erläutert. Es zeigen:
- Fig. 1: ein Blockschaltbild einer gesamten Schaltschrank-Überwachungseinrichtung, und
- Fig. 2: ein Blockschaltbild einer bei dem Überwachungssystem nach Fig. 1 vorgesehenen Steuerungseinrichtung;

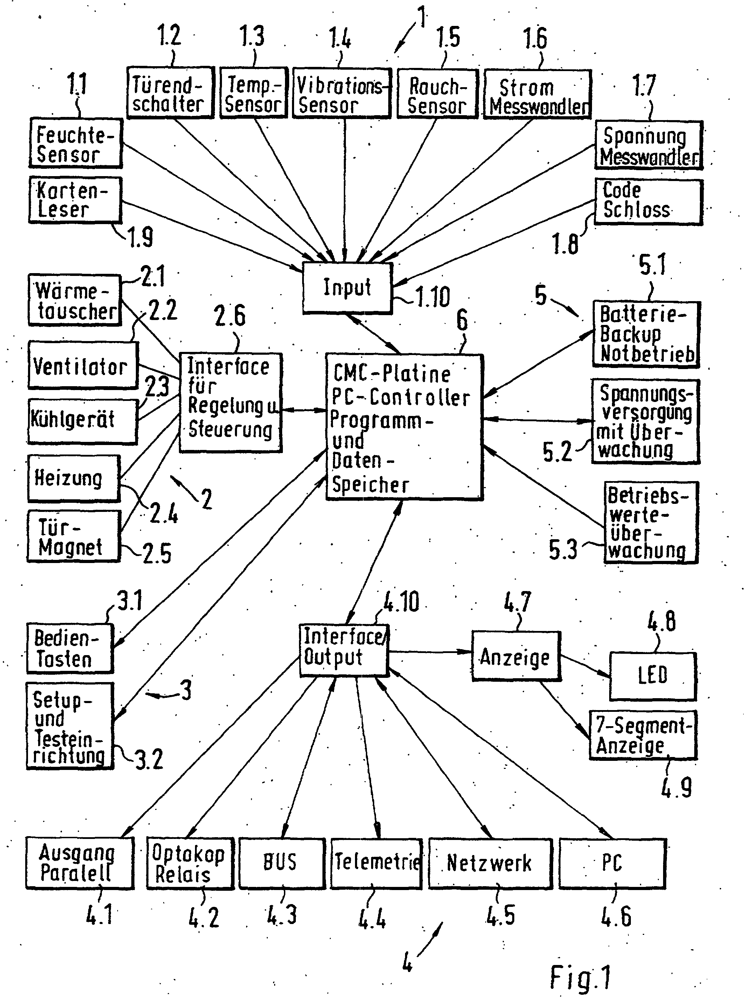

Die Fig. 1 zeigt eine Gesamtüberwachungseinrichtung 10 für einen Schaltschrank mit einer Sensoreinrichtung 1, einer Klimatisierungseinrichtung 2, einer Kommunikationseinrichtung 3, einer Ausgabeeinrichtung 4, einer Funktionsüberwachung 5 sowie einer zentralen Steuerungseinrichtung 6. Die Sensoreinrichtung 1 ist über eine Eingangsschnittstelle 1.10 mit der zentralen Steuerungseinrichtung 6 verbunden, wobei die Verbindung zwischen der.Eingangsschnittstelle 1,10 und der zentralen Steuerungseinrichtung 6 bidirektional ausgebildet ist. Die Sensoreinrichtung 1 umfaßt einen Feuchtesensor 1.1, einen Türendschalter 1.2, einen Temperaturfühler 1.3, einen Vibrationssensor 1.4, einen Rauchsensor 1.5, einen Strom-Meßwandler 1.6, einen Spannungs-Meßwandler 1.7, ein Code-Schloß 1.8 und einen Kartenleser 1.9.

Diese einzelnen Komponenten der Sensoreinrichtung 1 sind beispielhaft angegeben und können teilweise auch fehlen oder mehrfach vorhanden sein, je nach Einsatzbedingungen und Kundenwunsch. Dazu kann der Aufbau so sein, daß ein Austausch oder eine Ergänzung leicht möglich ist. Die Eingangsschnittstelle 1.10 ist vorzugsweise auf einer Platine aufgebaut und stellt auf der einen Seite. eine Spannungsversorgung für die Sensoreinrichtung 1 entsprechend den Anforderungen der einzelnen Komponenten sicher, wobei Gleich- und Wechselspannungen bereitgestellt werden können, und verarbeitet auf der anderen Seite die von den einzelnen Komponenten der Sensoreinrichtung 1 gelieferten Signale und formt sie so um, daß sie an die zentrale Steuerungseinrichtung 6 weitergeleitet werden können. Es kann zudem eine Bewertung und Gewichtung der Signale sowie eine logische Verknüpfung durchgeführt werden.

Die Klimatisierungseinrichtung 2 weist gemäß dem Ausführungsbeispiel einen Wärmetauscher 2.1, einen Ventilator 2.2, ein Kühlgerät 2.3, eine Heizung 2.4, einen Türmagnet 2.5 und eine Regelungs- und Steuerungsschnittstelle 2.6 auf. Die Regelungs- und Steuerschnittstelle 2.6 steht einerseits mit der zentralen Steuerungseinrichtung 6 und andererseits mit den genannten Komponeten der Klimatisierungseinrichtung 2 jeweils in bidirektionaler Verbindung. Mit Hilfe der Regelungs- und Steuerungsschnittstelle 2.6 werden die angeschlossenen Komponenten der Klimatisierungseinrichtung 2 entsprechend den Signalen der zentralen Steuerungseinrichtung 6 angesteuert. Infolge der bidirektionalen Verbindung besteht neben der Steuerung bzw. Regelung auch die Möglichkeit der Funktionsüberwachung der Klimatisierungseinrichtung 2 mit ihren einzelnen Komponenten. In der Regelungs- und Steuerungsschnittstelle 2.6 können alle für die Ansteuerung benötigen Signale selbst generiert werden, so daß der Anschluß an die zentrale Steuerungseinrichtung 6 einfach und übersichtlich ist. Der Ventilator 2.2 und ein evtl. Kunden-Lüfter können Wechselspannungs- oder Gleichspannungs-Versionen sein. Die Klimatisierungseinrichtung 2 umfaßt vorteilhafterweise auch Kompressoren, pneumatische oder hydraulische Ventile, Be- und Entfeuchtungseinrichtungen, Drucksensoren und Luftströmungsüberwachungseinrichtungen. Die einzelnen Komponenten der Klimatisierungseinrichtung 2 können nach dem jeweiligen Bedarf vorhanden sein, angesteuert und geregelt werden.

Die Kommunikationseinrichtung 3 umfaßt Bedientasten 3.1 und eine Programmier-, Einstell- und Testeinrichtung 3.2 sowie evtl. eine Leitstelle. Die Programmier-, Einstell- und Testeinrichtung 3.2 kann beispielsweise über ein (nicht gezeigtes) Handmodul bedient werden. Mit der Programmier-, Einstell-und Testeinrichtung 3.2 können sowohl fest eingespeicherte Testprozeduren aufgerufen werden, als auch bestimmte Programmteile geändert werden (z.B. nachträgliches Ändern von Temperatureinstellwerten). Weiterhin können kundenseitige Referenzwerte (z.B. für die Kalibrierung) eingegeben werden. Über die Leitstelle können Betriebszustände vom Überwachungspersonal kontrolliert und gegebenenfalls eingestellt werden.

Die Ausgabeeinrichtung 4 umfaßt einen Parallel-Ausgang 4.1, einen Optokoppler und/oder Relais 4.2, einen Bussystemausgang 4.3, einen Telemetrieausgang 4.4, einen Netzwerk-Ausgang 4.5, einen PC-Schnittstellenausgang 4.6, evtl. einen Analogsignalausgang, eine Anzeigeeinrichtung 4.7, eine Leuchtdiodenanzeige 4.8, eine Symbolanzeigeeinheit mit Symbolanzeigeelementen 4.9 sowie eine Ausgabeschnittstelle 4.10. Die Ausgabeschnittstelle 4.10 steht in bidirektionaler Verbindung mit der zentralen Steuerungseinrichtung 6. Mit Hilfe der Ausgabeabschnittstelle 4.10 können informationssignale in verschiedenster Form ausgegeben werden, wie die verschiedenen Komponenten der Ausgabe.einrichtung 4 erkennen lassen. Beispielsweise können über den Telemetrieausgang 4.4 Daten an eine entfernte Überwachungsstation übermittelt werden. Über das Relais 4.2 oder den Optokoppler 4.2 können z.B. externe Meldeeinrichtungen angesprochen werden, die z.B. auf eine Funktionsstörung oder einen unberechtigten Eingriff hinweisen. Der Bussystemausgang 4.3 kann z.B. einen Feldbus oder dgl. umfassen. Der PC-Schnittstellenausgang 4.6 kann z.B. als RS 232-Schnittstelle oder dgl. ausgebildet sein. Als Anzeigeeinrichtung 4.7 können auch andere geeignete Anzeigeeinheiten, z.B. LCD-Einheiten oder ähnliche, vorgesehen sein. Der Analogsignalausgang kann als Spannungs- oder Stromausgang ausgeführt sein.

Die Funktionsüberwachung beinhaltet eine Notversorgung 5.1, eine Normalversorgung 5.2 sowie eine Betriebswerteüberwachung 5.3. Die Notversorgung 5.1 stellt z.B. eine batteriegepufferte Spannungsversorgung für die Gesamtüberwachungseinrichtung 10 dar, die im Falle eines Netzausfalls bestimmte programmierte Notfunktionen bei Spannungsausfall aufrecht erhält. Die Normalversorgung 5.2, insbesondere Netz-Spannungsversorgung, wird ständig überwacht, um im Notfall direkt auf die Notversorgung 5.1 umzuschalten. Die zentrale Steuerungseinrichtung 6, die vorzugsweise auf einer Hauptplatine aufgebaut ist, ist noch einmal separat gepuffert.

Die Betriebsüberwachung 5.3 dient sowohl als Speicher für eine Betriebsdatenerfassung (z.B. Laufzeiten), als auch als Fehlerspeicher für im Betrieb aufgetretene Fehler oder Störungen, die sich selbst zurückgesetzt haben.

Außer den beispielhaft genannten einzelnen Komponenten, der verschiedenen Einrichtungen der Gesamtüberwachungseinrichtung 10 können, soweit zweckmäßig, weitere oder andere Komponenten vorgesehen werden. Dabei ist der Anschluß an das jeweilige Interface bzw. die Verbindung mit der zentralen Steuerungseinrichtung 6 einfach möglich un'd die Anpassung durch entsprechende einfache Umprogrammierung der zentralen Steuerungseinrichtung 6 ebenfalls leicht durchführbar.

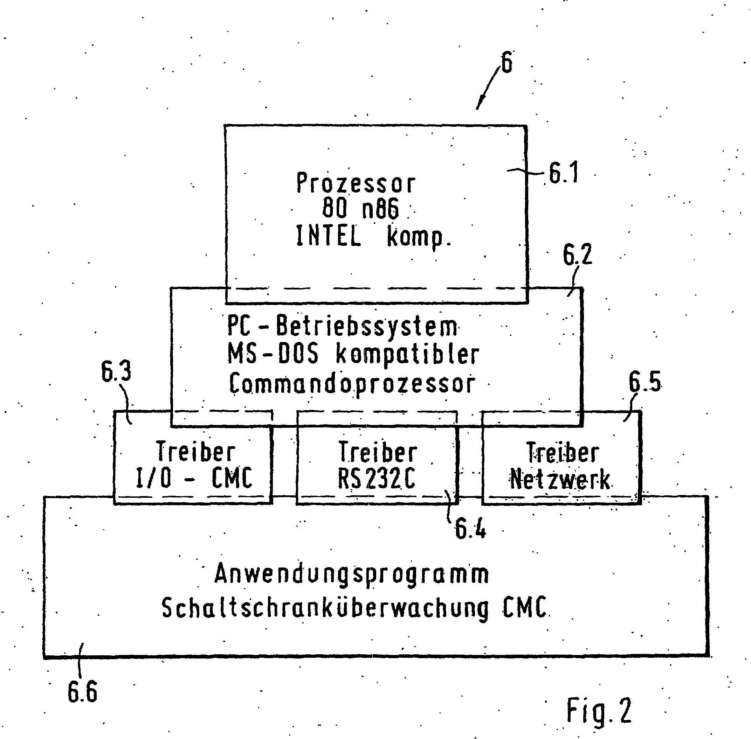

Die auf der Hauptplatine aufgebaute zentrale Steuerungseinrichtung 6 basiert vorteilhaft auf einem System mit Komponenten 6.1 bis 6.6 eines Personalcomputers (PC), wie in Fig. 2 schematisch dargestellt. Mit Hilfe von Speicherbausteinen, z.B. eines Eproms oder EEproms, ist die Gesamtüberwachungseinrichtung 10 in der Lage, alle Ein- und Ausgänge beliebig miteinander zu verknüpfen, so daß ohne aufwendige bauliche Änderungen sehr unterschiedliche Anpassungsmöglichkeiten gegeben sind. Die PC-Komponenten 6.1 bis 6.6. ermöglichen eine einfache Bedienung beim Programmieren der gewünschten Steuerungsabläufe und Einstellungen.

Ein PC-spezifischer Zentralprozessor 6.1 enthält in bekannter Weise ein Mikroprogramm für die Urladung aus einem Festwertspeicher. Nach der Urladung übernimmt das in einer Betriebssystemeinheit 6.2 vorgesehene Betriebssystem seine Funktion und ein eingerichteter Kommandoprozessor wird automatisch geladen. Mittels des Kommandoprozessors wird ein Anwendungsprogramm aus einem Anwendungsprogrammbereich 6.6 geladen, das die programmierten Überwachungs-, Steuerungs- und Regelungsabläufe vorgibt und dabei vorgegebene Bedingungen sowie eingestellte Werte berücksichtigt und gegebenenfalls noch erforderliche Daten errechnet. Beispielsweise kann aufgrund des Anwendungsprogramms ein spezifischer Reaktionsablauf erfolgen, wenn von einem Türendschalter 1.2 ein Signal eintrifft. In diesem Fall kann ein Alarm ausgelöst und/oder die Klimatisierungseinrichtung 2 abgeschaltet oder entsprechend einem weiteren Programm auf einen für diesen Fall vorgesehenen Betrieb umgesteuert werden. Auf ähnliche Weise können spezifische Steuerungsabläufe bei Eintreffen anderer Sensorsignale mittels des Anwendungsprogramms vorgegeben werden. Die Sensoren sind dabei insbesondere an einen Ein-/Ausgabe-Treiber 6.3 gekoppelt und werden nach Maßgabe des Anwendungsprogramms und des Betriebssystems abgefragt, und hinsichtlich ihrer Sensorsignale ausgewertet.

Über einen Treiber 6.4 für eine serielle Schnittstelle können insbesondere periphere Einheiten angeschlossen werden, beispielsweise ein selbständiger Personalcomputer mit Bildschirm und Tastatur zum Programmieren der zentralen Steuerungseinrichtung 6. Über einen Netzwerktreiber 6.5 kann ein Anschluß an ein externes Bussystem hergestellt werden, um beispielsweise die Daten mehrerer derartiger Schaltschränke in einer zentralen Datenverarbeitungsanlage auszuwerten.

Die in einer Standardsoftware bestehenden Treiber bilden eine Verbindung zwischen Anwendungsprogramm und Betriebssystem und verringern den Programmieraufwand zur Ankopplung und Überwachung, Steuerung und Regelung der Einbaueinheiten und Anbaueinheiten wesentlich.

Das Schaltschranküberwachungssystem ermöglicht auf diese Weise viele Überwachungs- und Steuerungsfunktionen. Beispielsweise kann eine Tür- und Verkleidungsteilekontrolle durchgeführt werden, indem mehrere Türendschalter 1.2 in einer Schleife geschaltet sind. Bei Unterbrechung der Schleife wird ein Signal abgegeben, das einen Öffnungszustand angibt. Der Türendschalter 1.2 kann auch als Magnetkontakt ausgebildet sein, der aus einem Magnet am beweglichen Teil und einem Readrelais am festen Teil besteht.

Weiterhin kann eine Legitimierungskontrolle vorgesehen sein mit einem Codierschloß, einem Magnetkartenleser, einem Chipkartenleser, einem Lochkartenleser, einer berührungslosen Magnetkartenerkennung, einer Stimmenerkennung, einer Porträterkennung und/oder einer Hand- oder Fingerabdruckerkennung. Gültige Kennungen sind in einem Lesegerät eingespeichert und werden bei Betätigung mit der Eingabe verglichen. Bei positivem Vergleich wird eine gültige Meldung über die Schnittstelle und bei negativem Vergleich eine Ungültig-Meldung abgegeben. Bei Speicherung der gültigen Kennungen in dem Gesamtüberwachungssystem 10 wird die Eingabe über eine Schnittstelle an eine Auswerteeinheit gegeben und dort verglichen.

Auch eine Näherungskontrolle kann vorgesehen sein. Durch Bewegungsmelder auf Infrarot-, Ultraschall- oder Radarbasis wird eine Annäherung erkannt. Das Betreten in Schranknähe kann durch Induktionsschleifen festgestellt werden. Mit Lichtschranken kann der Bereich um den Schaltschrank ebenfalls abgesichert werden. Um die Annäherung einer Person zu registrieren, können Trittkontakte. auch in Matten vor, neben oder hinter dem Schaltschrank verlegt werden. Wenn eine Annäherung erkannt worden ist, kann mittels der zentralen Steuerungseinrichtung 6 ein akustischer oder optischer. Alarm ausgelöst und auch über eine Schnittstelle weitergegeben und protokolliert werden.

Bei Ansprechen des Rauchsensors infolge einer "Verrauchung" des Schrankinnenraums kann Ursache ein Schwelbrand einer Kabelisolierung sein, die meist aus PVC besteht und eine Dioxingefahr auslöst. Ferner können Kunststoffteile oder Papier bei Druckerbetrieb brennen. Der Rauchsensor 1.5 bzw. Rauchmelder erfaßt Rauch- und Rußpartikel und gibt ein Signal an die zentrale Steuerungseinrichtung 6 ab, die eine programmierte Reaktion auslöst. Dabei kann vorgesehen sein, daß die Reaktion nach einer zu definierenden Zeitverzögerung nach einer oder mehreren Kontrollen des Signals des Rauchsensors 1.5 ausgelöst wird. Steht das Signal nicht mehr an, kann von einem Fehlalarm ausgegangen werden. Der Vorgang wird dann nur protokolliert. Bei. gültigem Alarm ist die Spannung zu den installierten Bauteilen abzuschalten. Die zentrale Steuerungseinrichtung 6 kann so konfiguriert sein, daß nach dem Alarm die Ventilatoren abgeschaltet werden, so daß der Aufstellraum weniger verqualmt. In Sonderfällen kann ein Absaugen aus dem Schrank sinnvoll sein. Die Ventilatoren sind hierzu einzuschalten. Durch motorisch betriebene Lüftungsklappen können im Alarmfall die Lüftungsöffnungen verschlossen werden. In Sonderfällen kann. ein Öffnen sinnvoll sein. Die Türverriegelung wird aufgehoben. Das Setzen einer hohen Priorität und die Auslösung des Alarms über möglichst viele Ausgänge kann, zweckmäßig sein (Sammelstörmeldung, Netzanschluß, serielle oder parallele Schnittstellen). Der Alarm kann in die normalen Feueralarmierungssysteme eingebunden werden, wobei eine Positionsangabe und Maßnahmenauswahl erfolgt. Automatische Feuerlöschsysteme im Schaltschrank werden aktiv geschaltet. Dabei wird eine im Schrank installierte Wassersprühanlage geöffnet. Ein unter Druck stehender Behälter mit einem Feuerlöschmittel, z.B. CO₂, wird geöffnet, und das Feuerlöschmittel kann über vorgesehene Öffnungen in den Schrank strömen. Der beim Löschen enstehende Druck im Schaltschrank kann durch Öffnen motorisch betriebener Klappen oder selbsttätig öffnender Klappen, die evtl. entriegelt werden, entweichen. Ein Entweichen über kontrolliert sich verformende Beplankungsteile ist ebenfalls möglich. Eine Zwangsentlüftung des Schaltschranks nach außen kann vorgesehen sein.

Ähnlich vielfältig können die über die zentrale Steuerungseinrichtung 6 gegebenen Funktionen auch für andere Sensorsignale sein.

Über den bidirektionalen Bussystemausgang 4.3, den bidirektionalen Netzwerkausgang bzw. einen entsprechenden Anschluß können auch Sprach- und Bilddaten übertragen werden. Damit ist z.B. eine Kommunikation zwischen Netz-Supervisor und Netz-Techniker möglich.

## Patentansprüche

1. Schaltschrank mit einer mindestens einen Temperaturfühler (1.3) aufweisenden Sensoreinrichtung (1) und mit einer mit dieser zusammenarbeitenden zentralen Steuerungseinrichtung (6) zum Überwachen, Steuern und/oder Regeln von die Funktion des Schaltschrankes selbst betreffenden Einbaueinheiten (2.1 bis 2.6, 5.1 bis 5.3) und/oder Anbaueinheiten des Schaltschrankes einschließlich einer Klimatisierungseinrichtung (2) in vorgebbarer Weise,
dadurch gekennzeichnet,
dass die zentrale Steuerungseinrichtung (6) Komponenten (6.1 bis 6.5) eines Personalcomputers aufweist, über die sie programmierbar ist und mit denen die Überwachung, Steuerung und/oder Regelung der Schaltschrankfunktion nach vorgebbaren Programmen erfolgt und
dass die Sensoreinrichtung (1) weiterhin wahlweise mindestens einen Feuchtesensor (1.1), einen Türendschalter (1.2), einen Vibrationssensor (1.4), einen Rauchsensor (1.5), einen Strom-Messwandler (1.6), einen Spannungs-Messwandler (1.7), einen Kunden-Temperaturfühler, ein Code-Schloss (1.8) und/oder einen Kartenleser (1.9) aufweist.

2. Schaltschrank nach Anspruch 1,
dadurch gekennzeichnet,
dass die Komponenten einen personalcomputer-typischen Mikroprozessor (6.1), ein Personalcomputer-Standardbetriebssystem und einen mit diesem kompatiblen Kommandoprozessor (6.2) sowie Treibereinheiten (6.3, 6.4, 6.5) umfassen.

3. Schaltschrank nach Anspruch 1 oder 2,
dadurch gekennzeichnet,
dass die Steuerungseinrichtung (6) einen Anwendungsprogrammteil (6.6) aufweist, mit dem die Überwachungs-, Steuerungs- und/oder Regelungsdaten bestimmbar sind.

4. Schaltschrank nach einem der vorhergehenden Ansprüche,
dadurch gekennzeichnet,
dass die Komponenten (6.1 bis 6.5) einen Anschluss für einen selbstständigen Personalcomputer aufweisen, mit dem die Programmierung durchführbar ist.

5. Schaltschrank nach einem der Ansprüche 2 bis 4,
dadurch gekennzeichnet,
dass die Treibereinheiten einen Ein-/Ausgabe-Treiber (6.3), über den die Sensoren (1.1 bis 1.9) abfragbar sind, einen Treiber für eine serielle Schnittstelle (6.4), über den Peripheriegeräte einschließlich eines selbstständigen Personalcomputers ankoppelbar sind, und einen Netzwerk-Treiber (6.5) aufweisen, über den die Steuereinrichtung (6) an einen Daten-BUS anschließbar ist.

6. Schaltschrank nach einem der vorhergehenden Ansprüche,
dadurch gekennzeichnet,
dass die Sensoreinrichtung (1) über eine Eingangsschnittstelle (1.10) mit der zentralen Steuerungseinrichtung (6) in bidirektionaler Verbindung steht.

7. Schaltschrank nach einem der vorhergehenden Ansprüche,
dadurch gekennzeichnet,
dass die Überwachungsgruppen eine Funktionsüberwachung (5) mit einer Spannungsversorgungseinrichtung (5.1,5.2) und einer Betriebsüberwachung (5.3) aufweisen,
dass bei Ausfall einer Normalversorgung (5.2) auf eine Notversorgung (5.1) umgeschaltet wird, um programmierte Notfunktionen aufrechtzuerhalten, und
dass die zentrale Steuerungseinrichtung (6) separat gepuffert ist.

8. Schaltschrank nach einem der vorhergehenden Ansprüche,
dadurch gekennzeichnet,
dass die Steuerungsbaugruppen eine Regelungs- und Steuerungsschnittstelle (2.6) aufweisen, die einerseits mit der zentralen Steuerungseinrichtung (6) und andererseits mit einer Klimatisierungseinrichtung (2) in bidirektionaler Verbindung steht,
dass die Klimatisierungseinrichtung (2) wahlweise mindestens einen Wärmetauscher (2.1), einen Ventilator (2.2), ein Kühlgerät (2.3), eine Heizung (2.4), einen Türmagnet (2.5) und/oder einen Kunden-Lüfter umfasst,
dass die für die Regelung und Steuerung benötigten Signale in der Regelungs- und Steuerungsschnittstelle (2.6) generierbar sind und
dass die Klimatisierungseinrichtung (2) entsprechend Signalen der zentralen Steuerungseinrichtung (6) ansteuerbar ist.

9. Schaltschrank nach einem der vorhergehenden Ansprüche,
dadurch gekennzeichnet,
dass die Steuerungsbaugruppen eine Ausgabeschnittstelle (4.10) aufweisen, die einerseits mit der zentralen Steuerungseinrichtung (6) in bidirektionaler Verbindung steht und andererseits mit einer Ausgabeeinrichtung (4) verbunden ist,
dass die Ausgabeeinrichtung (4) wahlweise mindestens einen parallelen Ausgang (4.1), ein Relais, einen Optokoppler (4.2), einen Bussystemausgang (4.3), einen Telemetrieausgang (4.4), einen Netzwerk-Ausgang (4.5), einen PC-Schnittstellenausgang (4.6), eine Anzeigeneinrichtung (4.7), eine Leuchtdiodenanzeige (4.8) und/oder eine Symbolanzeigeeinheit mit Symbolanzeigeelementen (4.9) aufweist und
dass in der Ausgabeschnittstelle (4.10) Signale der zentralen Steuerungseinrichtung (6) zum Ansprechen der Ausgabeeinrichtung (4) umformbar sind.

10. Schaltschrank nach einem der vorhergehenden Ansprüche,
dadurch gekennzeichnet,
dass mit der zentralen Steuerungseinrichtung (6) Bedientasten (3.1), eine Programmier-, Einstell- und Testeinrichtung (3.2) und/oder eine Leitstelle bidirektional verbunden sind und
dass mit der Programmier-, Einstell- und Testeinrichtung (3.2) fest eingespeicherte Testprozeduren aufrufbar, bestimmte Programmteile änderbar und/oder kundenspezifische Referenzwerte eingebbar sind.

11. Schaltschrank nach einem der vorhergehenden Ansprüche,
dadurch gekennzeichnet,
dass die zentrale Steuerungseinrichtung (6) auf einer Hauptplatine aufgebaut ist und
dass alle Ein- und Ausgänge miteinander verknüpfbar sind.

## Claims

1. Switch cabinet having a sensor device (1) with at least one temperature sensor (1.3), and having a central control device (6) cooperating with the said sensor device for monitoring, controlling and/or regulating built-in units (2.1 to 2.6, 5.1 to 5.3) relating to the function of the switch cabinet itself and/or built-on units belonging to the switch cabinet, including an air-conditioning device (2), in a predefinable way,
characterized
in that the central control device (6) has components (6.1 to 6.5) of a personal computer, via which it can be programmed and with which the monitoring, control and/or regulation of the switch-cabinet function is carried out in accordance with predefinable parameters, and
in that the sensor device (1) additionally optionally has at least one humidity sensor (1.1), a door limit switch (1.2), a vibration sensor (1.4), a smoke sensor (1.5), a current transformer (1.6), a voltage transformer (1.7), a customer's temperature sensor, a code lock (1.8) and/or a card reader (1.9).

2. Switch cabinet according to Claim 1, characterized
in that the components comprise a microprocessor (6.1) typical of personal computers, a personal computer standard operating system and a command processor (6.2) compatible with the latter, and also driver units (6.3, 6.4, 6.5).

3. Switch cabinet according to Claim 1 or 2, characterized
in that the control device (6) has an application programme part (6.6) with which the monitoring, control and/or regulation data can be determined.

4. Switch cabinet according to one of the preceding claims, characterized
in that the components (6.1 to 6.5) have a connection for a self-contained personal computer with which the programming can be carried out.

5. Switch cabinet according to one of Claims 2 to 4, characterized
in that the driver units have an input/output driver (6.3), via which the sensors (1.1 to 1.9) can be interrogated, a driver for a serial interface (6.4), via which peripheral devices including a self-contained personal computer can be coupled, and a network driver (6.5), via which the control device (6) can be connected to a data bus.

6. Switch cabinet according to one of the preceding claims, characterized
in that the sensor device (1) has a bidirectional connection to the central control device (6) via an input interface (1.10).

7. Switch cabinet ,according to one of the preceding claims,
characterized
in that the monitoring groups have a functional monitoring means (5) with a voltage supply device (5.1, 5.2), and an operation monitoring means (5.3), in that,
in the event of failure of a normal supply (5.2), a changeover to an emergency supply (5.1) is made, in order to maintain programmed emergency functions, and in that the central control device (6) is buffered separately.

8. Switch cabinet according to one of the preceding claims,
characterized
in that the control subassemblies have a regulating and control interface (2.6) which, on the one hand, has a bidirectional connection to the central control device (6) and, on the other hand, has a bidirectional connection to an air-conditioning device (2),
in that the air-conditioning device (2) optionally comprises at least one heat exchanger (2.1), a fan (2.2), a refridgerator (2.3), a heater (2.4), a door magnet (2.5) and/or a customer's ventilator,
in that the signals needed for the regulation and control can be generated in the regulating and control interface (2.6), and
in that the air-conditioning device (2) can be driven in accordance with signals from the central control device (6).

9. Switch cabinet according to one of the preceding claims,
characterized
in that the control subassemblies have an output interface (4.10) which, on the one hand, has a bidirectional connection to the central control device (6) and, on the other hand, is connected to an output device (4),
in that the output device (4) optionally has at least one parallel output (4.1), a relay, an optocoupler (4.2), a bus system output (4.3), a telemetry output (4.4), a network output (4.5), a PC interface output (4.6), a display device (4.7), a light-emitting diode display (4.8) and/or a symbol display unit with symbol display elements (4.9), and
in that in the output interface (4.10), signals from the central control device (6) can be transformed in order to address the output device (4).

10. Switch cabinet according to one of the preceding claims,
characterized
in that operating keys (3.1), a programming, setting and testing device (3.2) and/or a control point are bidirectionally connected to the central control device (6), and
in that permanently stored test procedures can be called up with the programming, setting and testing device (3.2), specific program parts can be changed and/or customer-specific reference values can be input.

11. Switch cabinet according to one of the preceding claims,
characterized
in that the central control device (6) is built up on a main circuit board, and
in that all the input and outputs can be linked to one another.

## Revendications

1. Armoire de commutation avec un équipement de capteurs (1) comportant au moins un capteur de température (1.3) et avec un équipement de commande central (6) fonctionnant avec celui-ci pour surveiller, commander et/ou régler des ensembles de montage (2.1 à 2.6 et 5.1 à 5.3) qui concernent directement la fonction de l'armoire de commutation et/ou des ensembles annexes de l'armoire de commutation englobant avantageusement un équipement de climatisation (2), caractérisé en ce que l'équipement de commande central (6) comporte des composants (6.1 à 6.5) d'un ordinateur personnel, au moyen desquels il est programmable et au moyen desquels la surveillance, la commande et/ou le réglage de la fonction de l'armoire de commutation sont réalisés avantageusement par des programmes, et en ce que l'équipement de capteurs (1) comporte de plus au choix au moins un capteur d'humidité (1.1), un interrupteur de porte (1.2), un capteur de vibrations (1.4), un capteur de fumée (1.5), un convertisseur de mesure de courant (1.6), un convertisseur de mesure de tension (1.7), un capteur de mesure de température chez le client, une serrure à code (1.8) et/ou un lecteur de cartes (1.9).

2. Armoire de commutation selon la revendication 1, caractérisée en ce que les composants englobent un microprocesseur typique d'un ordinateur personnel (6.1), un système d'exploitation standard d'un ordinateur personnel, et un processeur de commande (6.2) ainsi que des ensembles actionneurs (6.3, 6.4, 6.5) compatibles avec ceux-ci.

3. Armoire de commutation selon la revendication 1 ou 2, caractérisée en ce que l'équipement de commande (6) comporte une partie de programme d'application (6.6) qui permet de définir les données de surveillance, de commande et/ou de réglage.

4. Armoire de commutation selon l'une des revendications précédentes, caractérisée en ce que les composants (6.1 à 6.5) présentent un raccordement pour un ordinateur personnel indépendant permettant de réaliser la programmation.

5. Armoire de commutation selon l'une des revendications 2 à 4, caractérisée en ce que les ensembles actionneurs présentent un actionneur d'entrée/sortie (6.3) permettant de lire les capteurs (1.1 à 1.9), un actionneur pour un port série (6.4) permettant de raccorder des équipements périphériques englobant un ordinateur personnel indépendant, et un actionneur de réseau (6.5) permettant de relier l'équipement de commande (6) à un BUS de données.

6. Armoire de commutation selon l'une des revendications précédentes, caractérisée en ce que l'équipement de capteurs (1) se trouve en liaison bidirectionnelle avec l'équipement de commande central (6) à travers un port d'entrée (1.10).

7. Armoire de commutation selon l'une des revendications précédentes, caractérisée en ce que les groupes de surveillance présentent une surveillance de la fonction (5) avec un équipement d'alimentation électrique (5.1, 5.2) et une surveillance du fonctionnement (5.3), en ce qu'on commute sur une alimentation de secours (5.1) en cas de défaillance de l'alimentation normale (5.2) pour préserver les fonctions de secours programmées et en ce que l'équipement de commande central (6) possède un tampon séparé.

8. Armoire de commutation selon l'une des revendications précédentes, caractérisée en ce que les groupes de commande présentent un port de réglage et de commande (2.6) qui sont reliés de manière bidirectionnelle d'une part à l'équipement de commande central (6) et d'autre part à un équipement de climatisation (2), et en ce que l'équipement de climatisation (2) englobe au choix au moins un échangeur de chaleur (2.1), un ventilateur (2.2), un appareil réfrigérant (2.3), un chauffage (2.4), un aimant de porte (2.5) et/ou un aérateur pour le client, en ce que les signaux nécessaires au réglage et à la commande peuvent être générés dans le port de réglage et de commande (2.6) et en ce que l'équipement de climatisation (2) peut être commandé de manière correspondante par les signaux de l'équipement de commande central (6).

9. Armoire de commutation selon l'une des revendications précédentes, caractérisée en ce que les groupes de commande présentent un port de sortie (4.10) qui est d'une part en liaison bidirectionnelle avec l'équipement de commande central (6) et qui est d'autre part relié à un équipement de sortie (4), en ce que l'équipement de sortie (4) présente au choix au moins une sortie parallèle (4.1), un relais, un opto-coupleur (4.2), une sortie du BUS du système (4.3), une sortie de télémétrie (4.4), une sortie réseau (4.5), une sortie de port pour PC (4.6), un équipement d'affichage (4.7), un affichage à diodes électro-luminescentes (4.8) et/ou un ensemble d'affichage de symboles avec des éléments d'affichage de symboles (4.9) et en ce que des signaux de l'équipement de commande central (6) pour la commande de l'équipement de sortie (4) peuvent être convertis dans le port de sortie (4.10).

10. Armoire de commutation selon l'une des revendications précédentes, caractérisée en ce que des touches de commande (3.1), un équipement de programmation, de réglage et de test (3.2) et/ou un poste de commande sont reliés de manière bidirectionnelle à l'équipement de commande central (6) et en ce que l'équipement de programmation, de réglage et de test (3.2) permet de rappeler des procédures de test stockées en dur, de modifier certaines parties de programme et/ou de saisir des valeurs de référence définies par le client.

11. Armoire de commutation selon l'une des revendications précédentes, caractérisée en ce que l'équipement de commande central (6) est monté sur une platine principale et en ce que toutes les entrées et sorties peuvent être interconnectées.
